(19) **Europäisches Patentamt / European Patent Office / Office européen des brevets**

(11) **EP 2 608 597 A1**

(12) **EUROPEAN PATENT APPLICATION**
published in accordance with Art. 153(4) EPC

(43) Date of publication:
**26.06.2013 Bulletin 2013/26**

(21) Application number: **11818085.0**

(22) Date of filing: **04.08.2011**

(51) Int Cl.:
**H04W 28/06** *(2009.01)*    **H04W 72/04** *(2009.01)*

(86) International application number:
**PCT/JP2011/067886**

(87) International publication number:
**WO 2012/023443 (23.02.2012 Gazette 2012/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.08.2010   JP 2010181907**

(71) Applicant: **NTT DoCoMo, Inc.**
**Tokyo 100-6150 (JP)**

(72) Inventors:
• **TAKEDA, Kazuaki**
  **Tokyo 100-6150 (JP)**
• **MIKI, Nobuhiko**
  **Tokyo 100-6150 (JP)**

(74) Representative: **HOFFMANN EITLE**
**Patent- und Rechtsanwälte**
**Arabellastrasse 4**
**81925 München (DE)**

(54) **BASE STATION APPARATUS, MOBILE TERMINAL APPARATUS AND COMMUNICATION CONTROL METHOD**

(57) Provided are a base station apparatus, a mobile terminal apparatus and a communication control method capable of preventing the increase in amount of signaling for uplink scheduling when allocation resource blocks are allocated in a discontiguous manner. The base station apparatus (20) determines discontiguous allocation positions of a first cluster and a second cluster to a frequency band. The frequency band is divided per RBG of a relatively small size (2 RBs) and the RBG is composed of contiguous RBs. The base station apparatus (20) indicates the allocation positions of the first cluster and the second cluster to a mobile terminal apparatus (10) with use of a group number of RBG of a relatively large RBG size (4 RBs).

FIG.5A

FIG.5B

FIG.5C

EP 2 608 597 A1

## Description

TECHNICAL FIELD

The present invention relates to a base station apparatus, a mobile terminal apparatus and a communication control method in a next-generation mobile communication system.

BACKGROUND ART

In a UMTS (Universal Mobile Telecommunications System) network, for the purposes of improving frequency usage efficiency and improving the data rates, system features based on W-CDMA (Wideband Code Division Multiple Access) are maximized by adopting HSDPA (High Speed Downlink Packet Access) and HSUPA (High Speed Uplink Packet Access). For this UMTS network, for the purposes of further increasing high-speed data rates, providing low delay and so on, long term evolution (LTE) has been under study (see, for example, Non Patent Literature 1) . In LTE, as multiplexing schemes, OFDMA (Orthogonal Frequency Division Multiple Access), which is different from W-CDMA, is used on the downlink, and SC-FDMA (Single Carrier Frequency Division Multiple Access) is used on the uplink.

In a third-generation system, it is possible to achieve a transmission rate of maximum approximately 2 Mbps on the downlink by using a fixed band of approximately 5 MHz. Meanwhile, in the LTE system, it is possible to achieve a transmission rate of about maximum 300 Mbps on the downlink and about 75 Mbps on the uplink by using a variable band which ranges from 1.4 MHz to 20 MHz. Furthermore, in the UMTS network, for the purpose of achieving further broadbandization and higher speed, successor systems to LTE have been under study (for example, LTE Advanced (LTE-A)). In LTE-A, there is an agreement that on the uplink, allocation resource blocks are allowed to be allocated to non-contiguous clusters in order to increase a frequency scheduling effect.

CITATION LIST

NON-PATENT LITERATURE

Non-Patent Literature 1: 3GPP, TR25.912 (V7.1.0), "Feasibility study for Evolved UTRA and UTRAN", Sept. 2006

SUMMARY OF THE INVENTION

TECHNICAL PROBLEM

As described above, when allocation resource blocks are allocated in a discontiguous manner on the uplink, there arises a problem of a significant increase in amount for signaling for uplink resource allocation from the base station apparatus to the mobile terminal apparatus.

The present invention was carried out in view of the foregoing, and aims to provide a base station apparatus, a mobile terminal apparatus and a communication control method capable of preventing the increase in amount of signaling for uplink resource allocation when allocating allocation resource blocks non-contiguously.

SOLUTION TO PROBLEM

The present invention provides a base station apparatus comprising: a scheduling section configured to determine discontiguous allocation positions of a plurality of clusters to a frequency band, the frequency band being divided per resource block group of a relatively small size or per resource block, and the resource block group being made of contiguous resource blocks; an uplink control information generating section configured to generate uplink allocation information to indicate each of the allocation positions of the clusters to a mobile terminal apparatus with use of a group number of resource block group of a relatively large size; and a transmitting section configured to transmit the uplink allocation information to the mobile terminal apparatus.

TECHNICAL ADVANTAGE OF THE INVENTION

According to the present invention, the allocation position of each cluster to the frequency band that is divided per resource block group of a relatively small size or per resource block is indicated by a group number of a resource block group of a relatively large size and is reported to the mobile terminal apparatus. With this structure, it is possible to prevent the increase in signaling amount for uplink resource allocation caused by subdividing the allocation size of each cluster to the frequency band. Accordingly, it is possible to perform detailed allocation of plural clusters to the frequency band while preventing the increase in signaling amount, thereby increasing the frequency scheduling effect.

BRIEF DESCRIPTION OF THE DRAWINGS

Fig. 1 is an explanatory diagram of a system band of the LTE-A system;
Fig. 2 provides explanatory diagrams of discontiguous resource allocation on the uplink;
Fig. 3 is an explanatory diagram of one example of the signaling method of uplink resource allocation in the LTE-A system;
Fig. 4 provides explanatory diagrams of other examples of the signaling method of uplink resource allocation in the LTE-A system;

Fig. 5 provides explanatory diagram of the signaling method of uplink resource allocation in the LTE-A system according to the present invention;

Fig. 6 is an explanatory diagram of a configuration of a mobile communication system;

Fig. 7 is an explanatory diagram of an overall configuration of a base station apparatus;

Fig. 8 is an explanatory diagram of an overall configuration of a mobile terminal apparatus;

Fig. 9 is a functional block diagram of a baseband signal processing section provided in the base station apparatus; and

Fig. 10 is a functional block diagram of a baseband signal processing section provided in the mobile terminal apparatus.

DESCRIPTION OF EMBODIMENTS

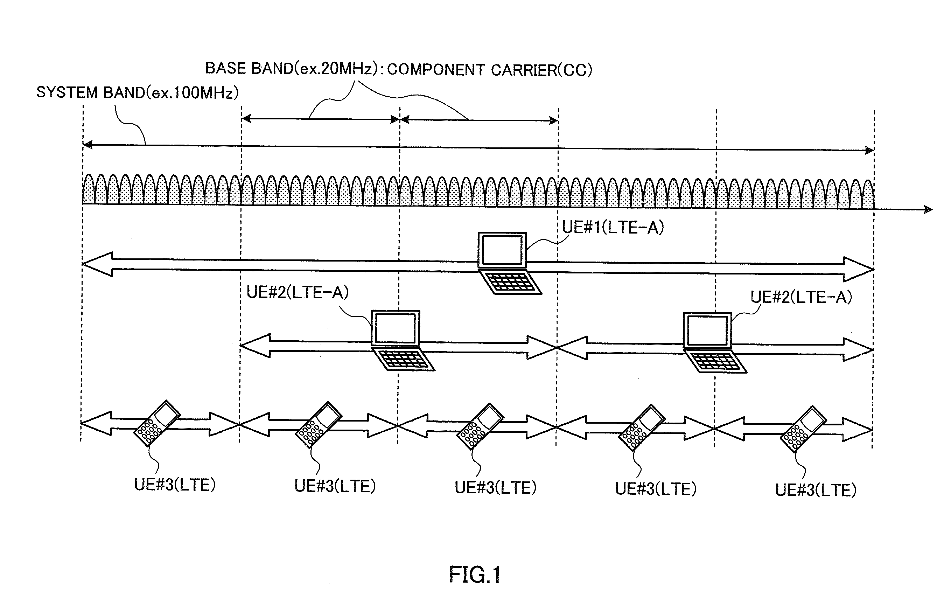

The following is description of embodiments. In the following description, a successor system to LTE is called LTE-A, however, this is by no means limiting and may be referred to as, for example, IMT-A or 4G. Fig. 1 is a diagram for explaining the frequency use conditions in downlink mobile communications. The example illustrated in Fig. 1 shows the frequency use conditions where there coexist an LTE-A system, which is a first mobile communication system having a relatively wide first system band formed with a plurality of fundamental frequency blocks (hereinafter referred to as "component carriers: CCs"), and an LTE system, which is a second mobile communication system having a relatively narrow (here, formed with one component carrier) second system band. In the LTE-A system, for example, radio communication is performed using a variable system bandwidth of 100 MHz or below, and, in the LTE system, radio communication is performed using a variable system bandwidth of 20 MHz or below. The system band for the LTE-A system is at least one fundamental frequency block, where the system band of the LTE system is one unit. Aggregating a plurality of fundamental frequency blocks into a wide band as one unit in this way is referred to as "carrier aggregation".

For example, in Fig. 1, the system band of the LTE-A system is a system band including bands of five component carriers (20 MHz×5=100 MHz), where the system band (base band: 20 MHz) of the LTE system is one component carrier. In Fig. 1, mobile terminal apparatus UE (User Equipment) #1 is a mobile terminal apparatus to support the LTE-A system (and also support the LTE system) and has a system band of 100 MHz. UE #2 is a mobile terminal apparatus to support the LTE-A system (and also support the LTE system) and has a system band of 40 MHz (20 MHz × 2 = 40 MHz). UE #3 is a mobile terminal apparatus to support the LTE system (and not support the LTE-A system) and has a system band of 20 MHz (base band).

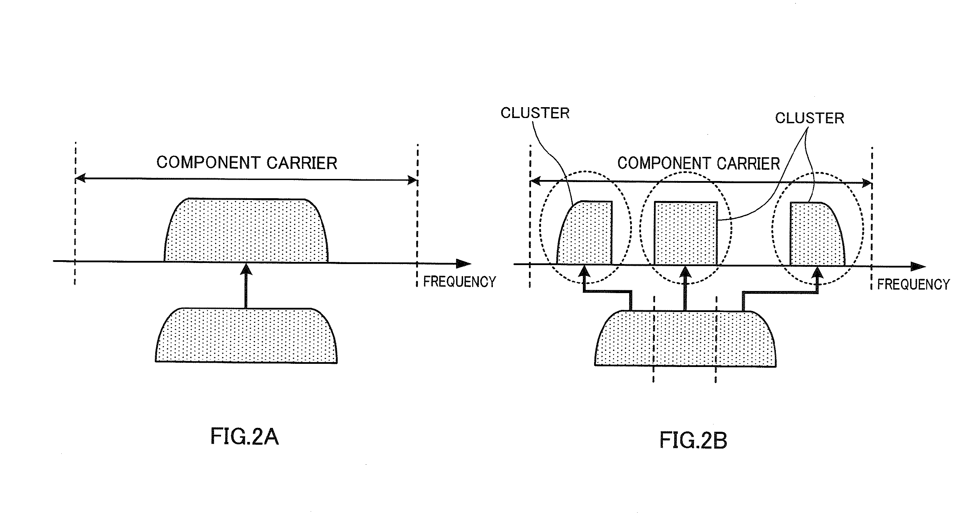

By the way, as illustrated in Fig. 2A, in the LTE system, contiguous frequency allocation to uplink transmission data is only allowed. In the meantime, as illustrated in Fig. 2B, in the LTE-A system, discontiguous frequency allocation is allowed to uplink transmission data (Clustered DFT-S-OFDM). Discontiguous frequency allocation in the LTE-A system enables spot allocation in accordance with the reception environment by dividing and clustering the uplink transmission data into a plurality of frequency areas. This makes it possible to improve the spectrum efficiency of the system band and increase the frequency scheduling effect.

However, in discontiguous frequency allocation, as the number of clusters is increased, the number of signaling bits for uplink resource allocation to be communicated from a base station apparatus to a mobile terminal apparatus is increased. Therefore, it is under study to set the cluster number "2", and minimize the increase in number of signaling bits for resource allocation while obtaining a sufficient scheduling effect.

As an effective signaling method when the cluster number is "2", it is under study to define contiguous resource blocks (RBs) in the frequency direction as a resource block group (RBG) and signal it on a per-RBG basis. In this signaling method, the base station apparatus notifies the mobile terminal apparatus of RBG numbers indicating the starting RBG and the ending RBG of each cluster.

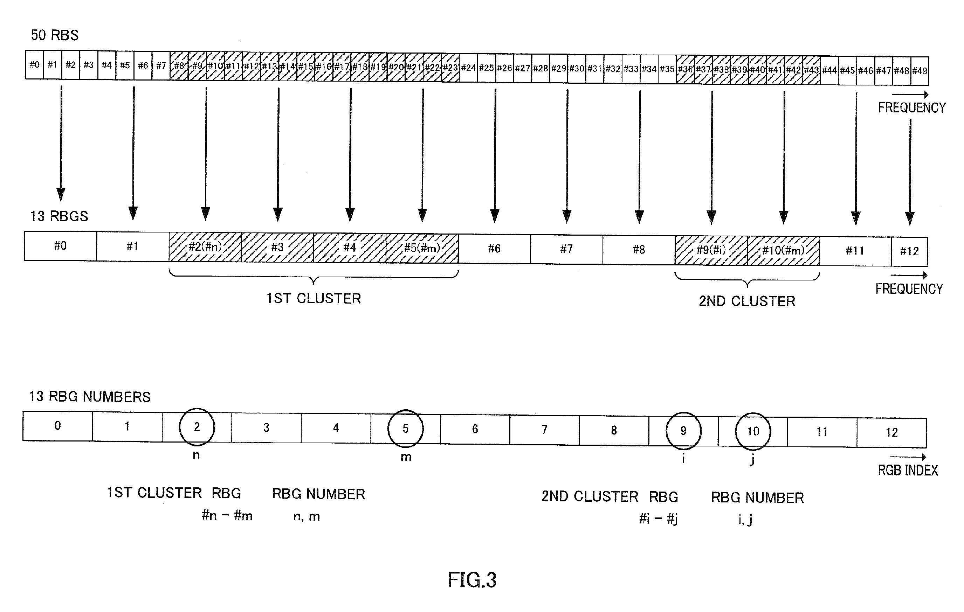

For example, as illustrated in Fig. 3, the system band composed of 50 RBs is represented by the RBG #0 to the RBG #12, where 1 RBG is formed with 4 RBs. Therefore, the first cluster of the RB #8 to the RB #23 is set to range from the RBG #2 to the RBG #5, and the second cluster of the RB #36 to the RB #43 is set to range from the RBG #9 to the RBG #10. Accordingly, the base station apparatus notifies the mobile terminal apparatus of the starting RBG number "2" and the ending RBG number "5" of the first cluster and the starting RBG number "9" and the ending RBG number "10" of the second cluster. That is, the base station apparatus notifies the mobile terminal apparatus of four RBG numbers in total. Here, the system band is not limited to 50 RBs but may be modified as appropriate.

The number of signaling bits at this moment is calculated by the following formula (1) where the total number of RBGs (the total number of RBG numbers) is "N" and the number of RBG numbers "M" to be communicated to the mobile terminal apparatus is 4.

[Formula 1]

$$X = \left\lceil \log_2 \binom{N}{M} \right\rceil \quad \cdots (1)$$

With this signaling method, the total number of RBGs (the total number of RBG numbers) is 13 and in comparison with the structure of signaling on a per-RB basis, the number of signaling bits can be reduced greatly.

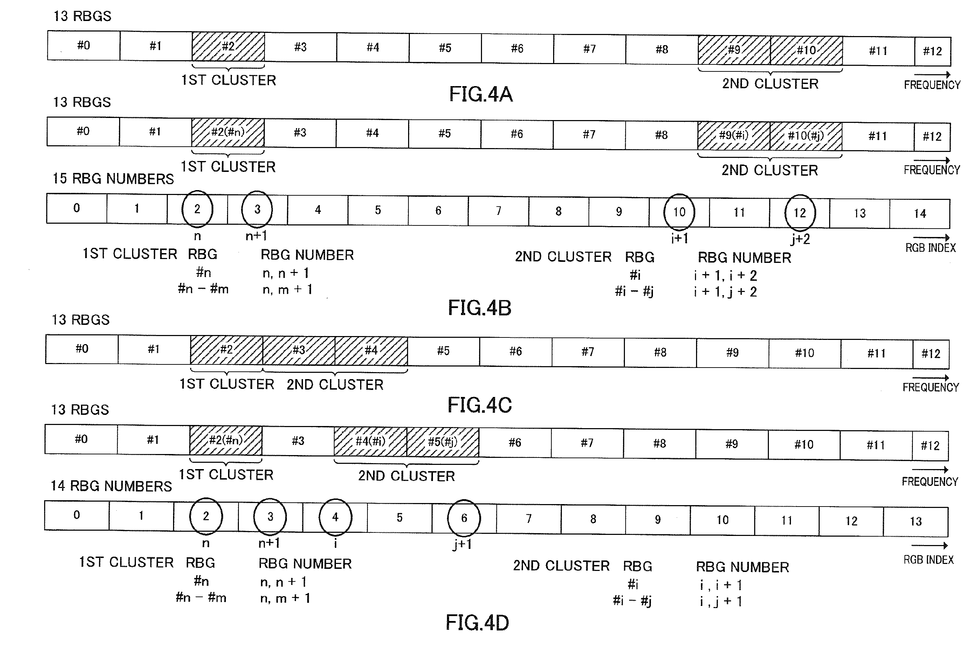

Here, as illustrated in Fig. 4A, when the first cluster is allocated to one RBG singly, the starting RBG number is the same as the ending RBG number, and the first cluster cannot be indicated by signaling. In order to address this problem, as illustrated in Fig. 4B, the total number of RBG numbers is increased by 2 as compared with the total number of RBGs. Here, the cluster set to the one RBG is defined by adjacent starting RBG number and ending RBG number.

More specifically, when the first cluster is allocated to the n-th RBG #n singly, the first cluster is indicated by the starting RBG number n and the ending RBG number n+1. When the first cluster is allocated to the n-th RBG #n to m-th RBG #m, the first cluster is indicated by the starting RBG number n and the ending RBG number m+1. When the second cluster is allocated to the i-th RBG #i singly, the second cluster is indicated by the starting RBG number i+1 and the ending RBG number i+2. And, when the second cluster is allocated to the i-th RBG #i to the j-th RBG #j, the second cluster is indicated by the starting RBG number i+1 and the ending RBG number j+2.

For example, in the example illustrated in Fig. 4B, the first cluster is allocated to the RBG #2, the second cluster is allocated to the RBG #9 to the RBG #10, and the base station apparatus notifies the mobile terminal apparatus of the RBG numbers "2", "3", "10", and "12". As the total number of RBG numbers at this moment is "15", cluster single allocation to one RBG is allowed while minimizing the number of signaling bits.

And, the above-described signaling method covers the case, as illustrated in Fig. 4C, where the first cluster is adjacent to the second cluster. As the structure in which the first cluster and the second cluster are adjacent to each other is not necessary, as illustrated in Fig. 4D, there may be considered another signaling method in which the total number of RBG numbers is reduced by one as compared with the above-described signaling method.

In this case, when the first cluster is allocated to the n-th RBG #n singly, the first cluster is indicated by the starting RBG number n and the ending RBG number n+1. And, when the first cluster is allocated to the n-th RBG #n to the m-th RBG #m, the first cluster is represented by the starting RBG number n and the ending RBG number m+1. When the second cluster is allocated to the i-th RBG #i singly, the second cluster is represented by the starting RBG number i and the ending RBG number i+1. And, when the second cluster is allocated to the i-th RBG #i to the j-th RBG #j, the second cluster is represented by the starting RBG number i and the ending RBG number j+1.

For example, in the exampled illustrated in Fig. 4D, the first cluster is allocated to the RBG #2, the second cluster is allocated to the RBG #4 to the RBG #5, and the base station apparatus notifies the mobile terminal apparatus of the RBG numbers "2", "3", "4" and "6". As the total number of RBG numbers at this moment is "14", cluster single allocation to one RBG is allowed while further minimizing the number of signaling bits.

By the way, when the system band is a broader band, for example, 20 MHz, in order to reduce the number of signaling bits, the RBG size needs to be 4 RBs. However, the resource allocation width becomes rough and the sufficient frequency scheduling effect may not be obtained as compared with the case of reducing the RBG size to 2 RBs. On the other hand, when the RBG size is 2 RBs, the above-described method has a problem that the number of signaling bits is increased drastically as the total number of RBG numbers increases.

Then, in order to solve this problem, the present inventors have carried out the present invention. That is, the gist of the present invention is to, noting that the number of signaling bits is increased by subdividing the RBG size, indicate a cluster of a relatively small RBG size with use of an RBG number of a relatively large RBG size. This structure enables detailed allocation of clusters to a predetermined frequency band, while preventing the increase in amount of signaling for resource allocation, thereby increasing the frequency scheduling effect.

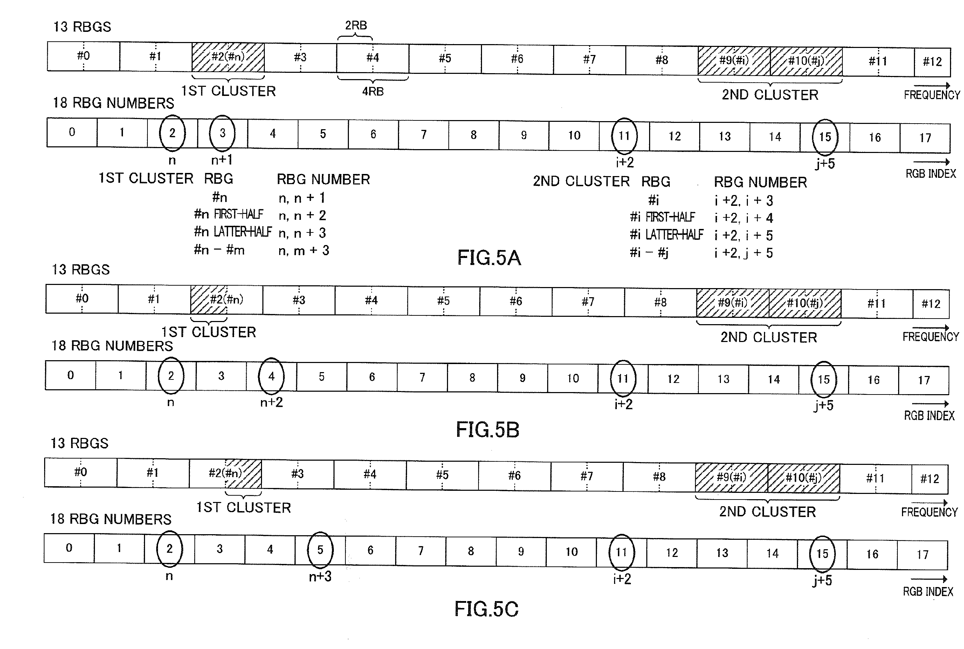

With reference to the accompanying drawings, the following description is made in detail about an embodiment of the present invention. First, with reference to Fig. 5, the signaling method according to the present embodiment is described. Here, in the following description, the signaling method is of signaling each cluster allocated to a frequency band of 2 RBs in RBG size with use of an RBG number of 4 RBs in RBG size. However, this is by no means limiting and may be modified as appropriate.

Fig. 5 illustrates the system band where the RBG size is 4 RBs. The first-half 2 RBs and the latter-half 2 RBs of each RBG are configured to enable cluster single allocation. That is, this system band is divided into RBGs of a relatively small RBG size (2 RBs) and these RBGs of a relatively small size makes up RBGs of a relatively large RBG size (4 RBs).

In this case, single allocation of each cluster to the first-half 2 RBs or the latter-half 2 RBs of one RBG is allowed by increasing the total number of RBG numbers by 5 as compared with the total number of RBGs. Here, the cluster singly allocated to one RBG is indicated by adjacent starting RBG number and ending RBG number. And, the cluster singly allocated to the first-half 2 RBs of one RBG is indicated by a starting RBG number and an ending RBG number that is the second from the starting RBG number. Further, the cluster singly allocated to the latter-half 2 RBs of one RBG is indicated by a starting RBG number and an ending RBG number that is the third from the starting RBG number.

Specifically, the instruction pattern of an allocation position by the RBG number is, for example, defined as follows. When the first cluster is allocated singly to the n-th RBG #n, the first cluster is indicated by the starting RBG number n and the ending RBG number n+1. When the first cluster is allocated singly to the first-half 2 RBs of the n-th RBG #n, the first cluster is indicated by the starting RBG number n and the ending RBG number n+2. When the first cluster is allocated singly to the latter-half 2 RBs of the n-th RBG #n, the first cluster is indicated by the starting RBG number n and the ending RBG number n+3. Further, when the first cluster is allocated to the n-th RBG #n to the m-th RBG #m, the first cluster is indicated by the starting RBG number n and the ending RBG number m+3.

On the other hand, when the second cluster is allocated to the i-th RBG #i singly, the second cluster is indicated by the starting RBG number i+2 and the ending RBG number i+3. When the second cluster is allocated to the first-half 2 RBs of the i-th RBG #i singly, the second cluster is indicated by the starting RBG number i+2 and the ending RBG number i+4. When the second cluster is allocated to the latter-half 2 RBs of the i-th RBG #i singly, the second cluster is indicated by the starting RBG number i+2 and the ending RBG number i+5. Further, when the second cluster is allocated to the i-th RBG #i to the j-th RBG #j, the second cluster is indicated by the starting RBG number i+2 and the ending RBG number j+5.

For example, as illustrated in Fig. 5A, when the first cluster is allocated to the RBG #2 and the second cluster is allocated to the RBG #9 to the RBG #10, the base station apparatus notifies the mobile terminal apparatus of the RBG numbers "2", "3", "11" and "15". And, as illustrated in Fig. 5B, when the first cluster is allocated to the first-half 2 RBs of the RBG #2 and the second cluster is allocated to the RBG #9 to the RBG #10, the base station apparatus notifies the mobile terminal apparatus of the RBG numbers "2", "4", "11" and "15". Further, as illustrated in Fig. 5C, when the first cluster is allocated to the latter-half 2 RBs of the RBG #2 and the second cluster is allocated to the RBG #9 to the RBG #10, the base station apparatus notifies the mobile terminal apparatus of the RBG numbers "2", "5", "11" and "15".

As the total number of RBG numbers at this moment is "18", signaling can be performed of a cluster allocated to a half size of one RBG while minimizing the increase in number of signaling bits. In this way, in the signaling method according to the present embodiment, a cluster of a relatively small RBG size is signaled with use of an RBG number of a relatively large RBG size. With this structure, it is possible to perform detailed allocation of clusters to the system band while minimizing the number of signaling bits for resource allocation.

Here, the instruction pattern of the allocation position by the RBG number may be defined in advance between the base station apparatus 20 and the mobile terminal apparatus 10 or synchronized at predetermined timings.

Besides, in this signaling method, the cluster set to one RBG is indicated by adjacent starting RBG number and ending RBG number. However, this structure is by no means limiting. The cluster set to one RBG may be indicated by a starting RBG number and an ending RBG number that is the second from the starting RBG number, or indicated by a starting RBG number and an ending RBG number that is the third from the starting RBG number.

Further, in this signaling method, the cluster set to first-half 2 RBs of one RBG is indicated by a starting RBG number and an ending RBG number that is the second from the starting RBG number. However, this structure is by no means limiting. The cluster set to the first-half 2 RBs of one RBG may be indicated by a starting RBG number and an ending RBG number that are adjacent to each other or indicated by a starting RBG number and an ending RBG number that is the third from the starting RBG number, or the like.

Furthermore, in this signaling method, the cluster set to latter-half 2 RBs of one RBG is indicated by a starting RBG number and an ending RBG number that is the third from the starting RBG number. However, this structure is by no means limiting. The cluster set to the latter-half 2 RBs of one RBG may be indicated by a starting RBG number and an ending RBG number that are adjacent to each other or indicated by a starting RBG number and an ending RBG number that is the second from the starting RBG number, or the like.

Still furthermore, in this signaling method, each cluster allocated to a frequency band of 2 RBs in RBG size can be signaled by using an RBG number composed of 4 RBs in RBG size. However, this structure is by no means limiting. In the present invention, the allocation position of each cluster allocated to a frequency band of RBGs of a relatively small RBG size or to a frequency band of RBs may be signaled by using an RBG number of a relatively large RBG size. For example, the present invention may be configured to signal the allocation position of each cluster allocated to one RB by using an RBG number of 2 RBs in RBG size, or to signal the allocation position of each cluster allocated to one RB by using an RBG number of 3 RBs in RBG size.

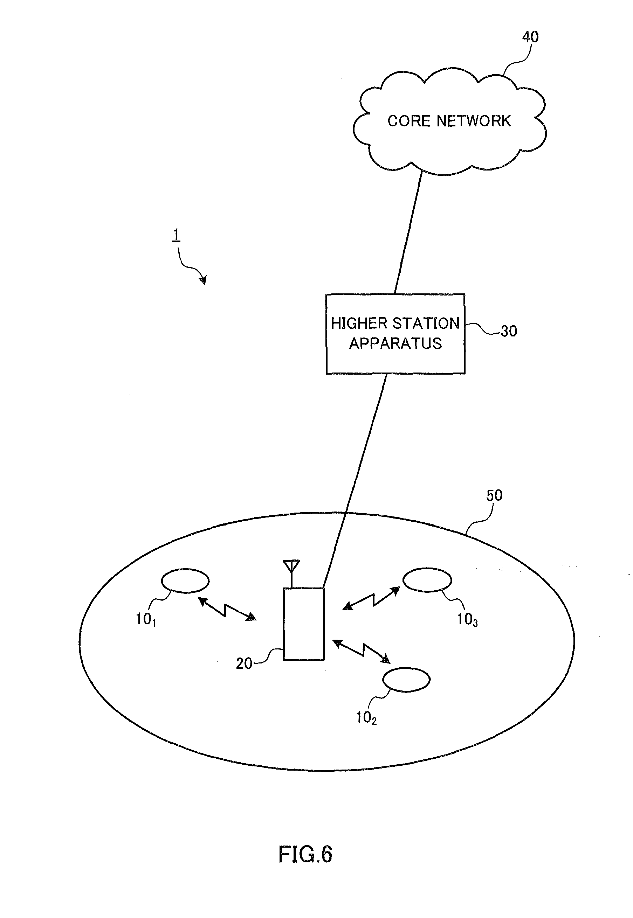

With reference to Fig. 6, description is made about a radio communication system 1 having mobile terminal apparatuses (UE: User Equipment) 10 and a base station apparatus (Node B) 20 according to an embodiment of the present invention. Here, it is assumed that the base station apparatus and mobile terminal apparatuses support the LTE-A system. Fig. 6 is a diagram for explaining a configuration of the mobile communication system 1 having the base station apparatus 20 and the mobile terminal apparatuses 10 according to the present embodiment. Note that the radio communication system 1 illustrated in Fig. 6 is a system subsuming, for example, the LTE system or SUPER 3G. Also, this radio communication system 1 may be referred to as IMT-Advanced or may be referred to as 4G.

As illustrated in Fig. 6, the radio communication system 1 is configured to include the base station apparatus 20 and a plurality of mobile terminal apparatuses 10 ($10_1$, $10_2$, $10_3$, ... $10_n$, where n is an integer to satisfy n>0) that communicate with the base station apparatus 20. The base station apparatus 20 is connected with a higher station apparatus 30, and this higher station apparatus 30 is connected with a core network 40. The mobile terminal apparatuses 10 communicate with the base station apparatus 20 in a cell 50. The higher station apparatus 30 includes, for example, an access gateway apparatus, a radio network controller (RNC), a mobility management entity (MME) and so on, but is by no means limited to these.

The mobile terminal apparatuses ($10_1$, $10_2$, $10_3$, ... $10_n$) include LTE terminals and LTE-A terminals, however, in the following description, they are referred to as "mobile terminal apparatuses 10," unless specified otherwise. Also, for ease of explanation, the mobile terminal apparatus 10 performs radio communication with the base station apparatus 20. However, more generally, user apparatuses (UE: User Equipment) including mobile terminal apparatuses and fixed terminal apparatuses may be used.

In the radio communication system 1, as radio access schemes, OFDMA (Orthogonal Frequency Division Multiple Access) is applied to the downlink, and SC-FDMA (Single-Carrier Frequency-Division Multiple Access) and clustered DFT-Spread OFDM are applied to the uplink. OFDMA is a multi-carrier transmission scheme to perform communication by dividing a frequency band into a plurality of narrow frequency bands (subcarriers) and mapping data to each subcarrier. SC-FDMA is a single carrier transmission scheme to reduce interference between terminals by dividing, per terminal, the system band into bands formed with one or continuous resource blocks, and allowing a plurality of terminals to use mutually different bands. Clustered DFT-Spread OFDM is a scheme to realize uplink multiple access by allocating a group (cluster) of discontiguous clustered subcarriers to one mobile station (UE) and applying discrete Fourier transform spread OFDM to the each cluster.

Here, the communication channels in the LTE system will be described. The downlink communication channels include the PDSCH (Physical downlink Shared CHannel), which is a downlink data channel used by each mobile terminal apparatus 10 on a shared basis, and downlink L1/L2 control channels (PDCCH, PCFICH and PHICH). The PDSCH transmits user data and higher control information. Scheduling information for the PDSCH and PUSCH (Physical Uplink Shared CHannel) and so on is transmitted by the PDCCH (Physical Downlink Control CHannel). The number of OFDM symbols to use for the PDCCH is transmitted by the PCFICH (Physical Control Format Indicator CHannel). HARQ ACK/NACK for the PUSCH is transmitted by the PHICH (Physical Hybrid-ARQ Indicator CHannel). The higher control signals include RRC signaling, which reports uplink radio access schemes (SC-FDMA/Clustered DFT-Spread OFDM) applied to each component carrier to the mobile terminal apparatus 10.

The uplink communication channels include a PUSCH, which is an uplink data channel used by each mobile terminal apparatus 10 on a shared basis, and a PUCCH (Physical Uplink Control CHannel), which is an uplink control channel. User data and higher control information are transmitted by means of this PUSCH. Furthermore, the PUCCH transmits downlink radio quality information (CQI: Channel Quality Indicator), ACK/NACK, and so on.

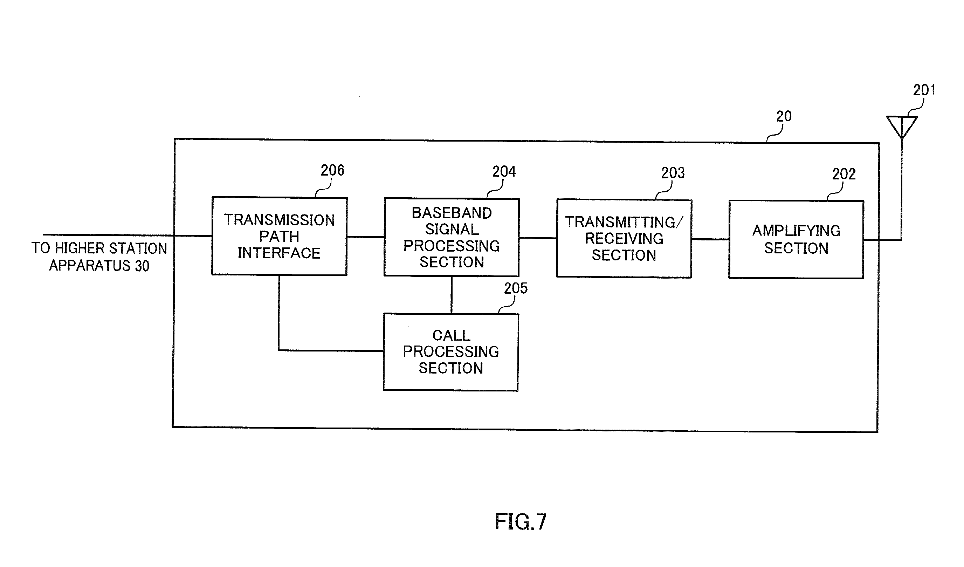

Referring to Fig. 7, an overall configuration of the base station apparatus 20 according to the present embodiment will be described. The base station apparatus 20 has a transmitting/receiving antenna 201, an amplifying section 202, a transmitting/receiving section 203, a baseband signal processing section 204, a call processing section 205 and a transmission path interface 206. User data that is transmitted on the downlink from the base station apparatus 20 to the mobile terminal apparatus 10 is input to the baseband signal processing section 204, through the transmission path interface 206, from the higher station apparatus 30.

In the baseband signal processing section 204, a downlink data channel signal is subjected to PDCP layer processing, RLC (Radio Link Control) layer transmission processing such as division and coupling of user data and RLC retransmission control transmission processing, MAC (Medium Access Control) retransmission control, including, for example, HARQ (Hybrid Automatic Repeat reQuest) transmission processing, scheduling, transport format selection, channel coding, inverse fast Fourier transform (IFFT) processing, and precoding processing. Furthermore, as with signals of the physical downlink control channel, which is a downlink control channel, transmission processing is performed, including channel coding and inverse fast Fourier transform.

Also, the baseband signal processing section 204 passes control information for allowing the mobile terminal apparatus 10 to perform radio communication with the base station apparatus 20, to the mobile terminal apparatuses 10 connected to the same cell 50, by a broadcast channel. Broadcast information for communication in the cell 50 includes, for example, the uplink or downlink system bandwidth, identification information of a root sequence (root sequence index) for generating random access preamble signals in the PRACH (Physical Random Access CHannel), and so on.

In the transmitting/receiving section 203, the baseband signal output from the baseband signal processing section 204 is subjected to frequency conversion processing into a radio frequency band. The amplifying section 202 amplifies the transmission signal having been subjected to frequency conversion, and outputs the result to the transmitting/receiving antenna 201.

Meanwhile, as for signals to be transmitted on the uplink from the mobile terminal apparatus 10 to the base station apparatus 20, a radio frequency signal that is received in the transmitting/receiving antenna 201 is amplified in the amplifying section 202, subjected to frequency conversion and converted into a baseband signal in the transmitting/receiving section 203, and is input to the baseband signal processing section 204.

The baseband signal processing section 204 performs FFT processing, IDFT processing, error correction decoding, MAC retransmission control reception processing, and RLC layer and PDCP layer reception processing of the user data included in the baseband signal that is received on the uplink. The decoded signal is transferred to the higher station apparatus 30 through the transmission path interface 206.

The call processing section 205 performs call processing such as setting up and releasing a communication channel, manages the state of the base station apparatus 20 and manages the radio resources.

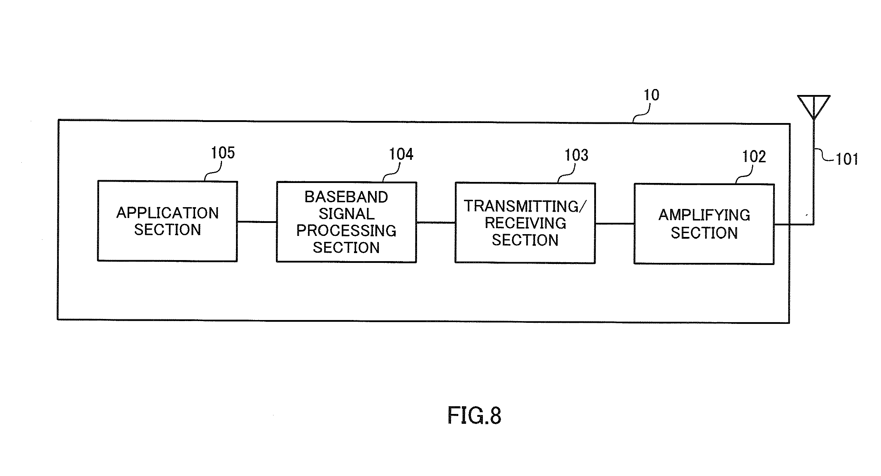

Next, referring to Fig. 8, an overall configuration of the mobile terminal apparatus 10 according to the present embodiment will be described. An LTE terminal and an LTE-A terminal have the same hardware configurations in the principle parts, and therefore will be described indiscriminately. The mobile terminal apparatus 10 has a transmitting/receiving antenna 101, an amplifying section $10_2$, a transmitting/receiving section $10_3$, a baseband signal processing section 104 and an application section 105.

As for downlink data, a radio frequency signal received in the transmitting/receiving antenna 101 is amplified in the amplifying section $10_2$, and subjected to frequency conversion and converted into a baseband signal in the transmitting/receiving section 103. This baseband signal is subjected to reception processing such as FFT processing, error correction decoding and retransmission control and so on, in the baseband signal processing section 104. In this downlink data, downlink user data is transferred to the application section 105. The application section 105 performs processing related to higher layers above the physical layer and the MAC layer. Also, in the downlink data, broadcast information is also transferred to the application section 105.

On the other hand, uplink user data is input from the application section 105 to the baseband signal processing section 104. In the baseband signal processing section 104, retransmission control (HARQ (Hybrid ARQ)) transmission processing, channel coding, DFT processing, IFFT processing and so on are performed. The baseband signal output from the baseband signal processing section 104 is subjected to frequency conversion processing in the transmitting/receiving section 103 and converted into a radio frequency band, and, after that, amplified in the amplifying section 102 and transmitted from the transmitting/receiving antenna 101.

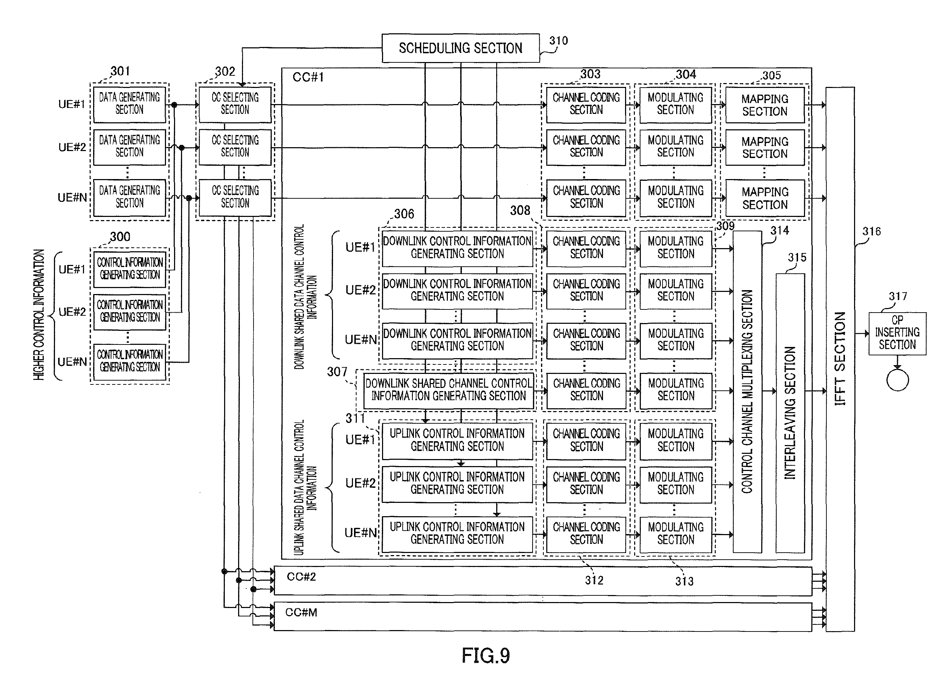

Fig. 9 is a functional block diagram of the baseband signal processing section 204 and part of the higher layers provided in the base station apparatus 20 according to the present embodiment, and primarily illustrates the functional blocks of the transmission processing section in the baseband signal processing section 204. Fig. 9 illustrates an example of a base station configuration which can support maximum M (CC #1 to CC #M) component carriers. Transmission data for the mobile terminal apparatus 10 under control of the base station apparatus 20 is transferred from the higher station apparatus 30 to the base station apparatus 20.

A control information generating section 300 generates higher control information for performing higher layer signaling (for example, RRC signaling), on a per-user basis. The higher control information may contain an instruction pattern of allocation position by an RBG number. The higher control information may contain an uplink radio access scheme to be passed to the mobile terminal apparatus 10.

A data generating section 301 outputs the transmission data transferred from the higher station apparatus 30 separately as user data. A component carrier selecting section 302 selects component carriers to use in radio communication with the mobile terminal apparatus 10 on a per-user basis.

A scheduling section 310 controls allocation of component carriers to a serving mobile terminal apparatus 10 according to overall communication quality of the system band. In the uplink scheduling, either SC-FDMA or clustered DFT-Spread OFDM is controlled dynamically (per subframe). For component carriers to which clustered DFT-Spread OFDM applies, the number of clusters and cluster resources are determined.

Also, the scheduling section 310 controls resource allocation in component carriers CC #1 to CC #M. The LTE terminal user and the LTE-A terminal user are scheduled separately. The scheduling section 310 receives as input the transmission data and retransmission command from the higher station apparatus 30, and also receives as input the channel estimation values and resource block CQIs from the receiving section having measured an uplink received signal. The scheduling section 310 schedules uplink and downlink control information and uplink and downlink shared channel signals, with reference to the retransmission command, channel estimation values and CQIs that are received as input from the higher station apparatus 30. A propagation path in mobile communication varies differently per frequency, due to frequency selective fading. So, upon transmission of user data to the mobile terminal apparatus 10, resource blocks of good communication quality are assigned to each mobile terminal apparatus 10, on a per-subframe basis (which is referred to as "adaptive frequency scheduling"). In adaptive frequency scheduling, for each resource block, a mobile terminal apparatus 10 of good propagation path quality is selected and assigned. Consequently, the scheduling section 310 assigns resource blocks, using the CQI of each resource block, fed back from each mobile terminal apparatus 10. Also, the MCS (coding rate and modulation scheme) to fulfill a required block error rate with the assigned resource blocks is determined. Parameters to fulfill the MCS (coding rate and modulation scheme) determined by the scheduling section 310 are set in channel coding sections 303, 308 and 312, and in modulating sections 304, 309 and 313.

And, in component carriers (uplink) to which the clustered DFT-Spread OFDM is applied, resources of each cluster are determined on a per-RBG basis where the RBG is a group of contiguous resource blocks. In determining resources of this cluster, when the RBG size is 4 RBs, plural allocation and single allocation are supported and when the RBG size is 2 RBs, single allocation is only supported. For example, when as illustrated in Fig. 5A, the RBG size is 4 RBs, single allocation to the RBG #2 by the first cluster and plural allocation to the RBG #9 to the RBG #10 by the second cluster are allowed. And, as illustrated in Figs. 5B and 5C, when the RBG size is 2 RBs, single allocation to the first-half 2 RBs of the RBG #2 by the first cluster and single allocation to the latter-half 2 RBs of the RBG #2 by the first cluster are allowed. Note the description has been made on the assumption that the RBG size is 4 RBs or 2 RBs, however this is by no means limiting. Any configuration may be adopted as far as plural allocation and single allocation are allowed when the RBG size is relatively large and single allocation is supported when the RBG size is relatively small. And, when the RBG size is 1 RB, it may be indicated by one resource block.

The baseband signal processing section 204 has channel coding sections 303, modulating sections 304, and mapping sections 305, to match the maximum number of users to be multiplexed, N, in one component carrier. The channel coding section 303 performs channel coding of the shared data channel (PDSCH), which is formed with user data (including part of higher control signals) that is output from the data generating section 301, on a per-user basis. The modulating section 304 modulates user data having been subjected to channel coding, on a per-user basis. The mapping section 305 maps the modulated user data to radio resources.

Also, the baseband signal processing section 204 has a downlink control information generating section 306 that generates downlink shared data channel control information, which is user-specific downlink control information, and a downlink shared channel control information generating section 307 that generates downlink shared control channel control information, which is user-common downlink control information.

The downlink control information generating section 306 generates downlink control signals (DCI) of PDCCH from the resource allocation information, PUCCH transmission power control command, which are determined on a per-user basis. Also, the downlink control information generating section 306 generates HARQ ACK/NACK for a reception signal on which uplink layers are spatially multiplexed.

The baseband signal processing section 204 has channel coding sections 308 and modulating sections 309 to match the maximum number of users to be multiplexed, N, in one component carrier. The channel coding section 308 performs, on a per-user basis, channel coding of control information, which is generated in the downlink control information generating section 306 and the downlink shared channel control information generating section 307. The modulating section 309 modulates the downlink control information having been subjected to channel coding.

Also, the baseband signal processing section 204 has an uplink control information generating section 311, a channel coding section 312, and a modulating section 313. The uplink control information generating section 311 generates, on a per-user basis, uplink shared data channel control information (UL grant and so on), which is control information for controlling the uplink shared data channel (PUSCH). The channel coding section 312 performs, on a per-user basis, channel coding of uplink shared data channel control information, and the modulating section 313 modulates the uplink shared data channel control information having been subjected to channel coding, on a per-user basis.

And, the uplink control information generating section 311 generate uplink allocation information from uplink resource allocation information (cluster) that is determined per user, MCS information and redundancy version (RV), an identifier (new data indicator) to identify new data or retransmission data, a transmission power control command (TPC) of PUSCH, cyclic shift for the demodulation reference signal (CS for DMRS), CQI request, and so on. In this case, in subframes (component carriers) where cluster DFT-Spread OFDM is selected as the uplink radio access scheme, the resource allocation information is generated with a starting RBG number and an ending RBG number of each cluster, the total number of RBG numbers and so on.

The starting RBG number and the ending RBG number indicate the allocation position of each cluster in accordance with the above-described signaling method of the present invention. For example, as illustrated in Fig. 5A, the cluster set to one RBG is indicated by a starting RBG number and an ending RBG number which are adjacent to each other. As illustrated in Fig. 5B, the cluster set to the first-half 2 RBs of one RBG is indicated by a starting RBG number and an ending RBG number that is the second from the starting RBG number. As illustrated in Fig. 5C, the cluster set to the latter-half 2 RBs of one RBG is indicated by a starting RBG number and an ending RBG number that is the third from the starting RBG number.

The control information that is modulated on a per-user basis in the above modulating sections 309 and 313 is multiplexed in a control channel multiplexing section 314 and furthermore interleaved in an interleaving section 315. A control signal that is output from the interleaving section 315 and user data that is output from the mapping section 305 are input into an IFFT section 316 as a downlink channel signal. The IFFT section 316 converts the downlink channel signal from a frequency domain signal into a time sequence signal by performing an inverse fast Fourier transform of the downlink channel signal. A cyclic prefix inserting section 317 inserts cyclic prefixes in the time sequence signal of the downlink channel signal. Note that a cyclic prefix functions as a guard interval for cancelling the differences in multipath propagation delay. The transmission data to which cyclic prefixes are added, is transmitted to the transmitting/receiving section 203.

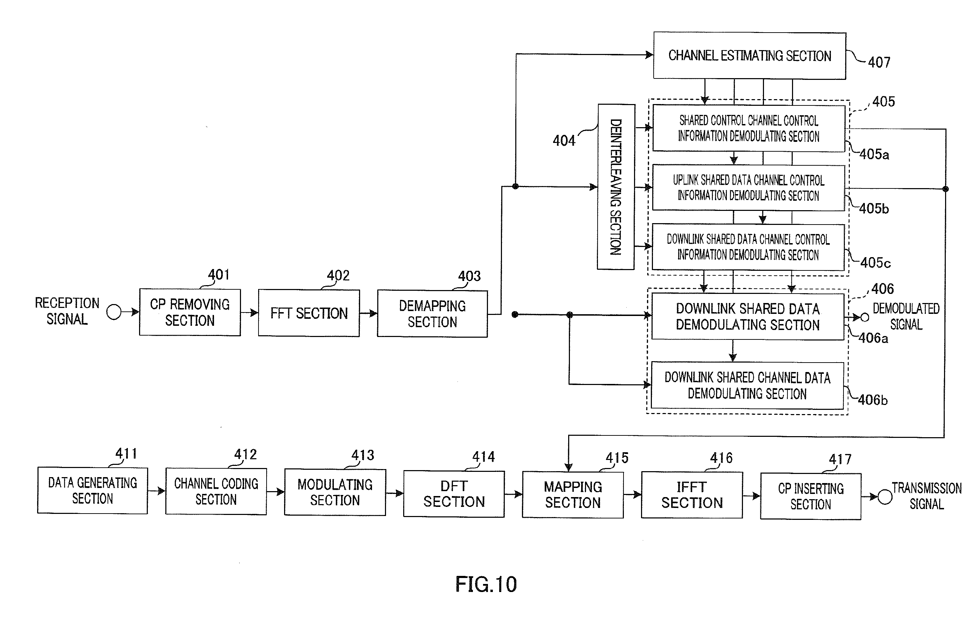

Fig. 10 is a functional block diagram of the baseband signal processing section 104 provided in the mobile terminal apparatus 10, illustrating functional blocks of an LTE-A terminal supporting LTE-A. First description is made about a downlink configuration of the mobile terminal apparatus 10.

A CP removing section 401 removes the CPs from a downlink signal received from the radio base station apparatus 20 as received data. The downlink signal, from which the CPs have been removed, is input into an FFT section 402. The FFT section 402 performs a fast Fourier transform (FFT) on the downlink signal, converts the time-domain signal into a frequency domain signal, and inputs the frequency domain signal into a demapping section 403. The demapping section 403 demaps the downlink signal, and extracts, from the downlink signal, multiplexed control information in which a plurality of pieces of control information are multiplexed, user data, and higher control signals. Note that the demapping process by the demapping section 403 is performed based on higher control information that is received as input from the application section 105. The multiplexed control information that is output from the demapping section 403 is deinterleaved in a deinterleaving section 404.

Also, the baseband signal processing section 104 has a control information demodulating section 405 that demodulates control information, a data demodulating section 406 that demodulates downlink shared data, and a channel estimating section 407. The control information demodulating section 405 includes a shared control channel control information demodulating section 405a that demodulates downlink shared control channel control information from the multiplexed control information, an uplink shared data channel control information demodulating section 405b that demodulates uplink shared data channel control information from the multiplexed control information, and a downlink shared data channel control information demodulating section 405c that demodulates downlink shared data channel control information from the multiplexed control information. The data demodulating section 406 includes a downlink shared data demodulating section 406a that demodulates the user data and higher control signals, and a downlink shared channel data demodulating section 406b that demodulates downlink shared channel data.

The shared control channel control information demodulating section 405a extracts shared control channel control information, which is user-common control information, by the blind decoding processing of the common search spaces of the multiplexed control information (PDCCH), demodulation processing, channel decoding processing and so on. The shared control channel control information includes downlink channel quality information (CQI), and therefore is input into a mapping section 415 (described later), and mapped as part of transmission data for the base station apparatus 20.

The uplink shared data channel control information demodulating section 405b extracts uplink shared data channel control information, which is user-specific uplink allocation information, by the blind decoding processing of the user-specific search spaces of the multiplexed control information (PDCCH), demodulation processing, channel decoding processing and so on. The uplink allocation information is used to control the uplink shared data channel (PUSCH), and is input to the downlink shared data channel control information demodulating section 405c and the downlink shared channel data demodulating section 406b. Here, when the clustered DFT-Spread OFDM is applied as the uplink radio access scheme, the resource allocation information (RBG number) to indicate the cluster allocation position is extracted.

The downlink shared data channel control information demodulating section 405c extracts downlink shared data channel control information, which is user-specific downlink control signals, by the blind decoding processing of the user-specific search spaces of the multiplexed control information (PDCCH), demodulation processing, channel decoding processing and so on. The downlink shared data channel control information is used to control the downlink shared data channel (PDSCH), and is input to the downlink shared data demodulating section 406.

Also, the downlink shared data channel control information demodulating section 405c performs the blind decoding process of the user-specific search spaces, based on information which relates to the PDCCH and PDSCH and which is included in higher control information demodulated in the downlink shared data demodulating section 406a.

The downlink shared data demodulating section 406a acquires the user data and higher control information based on the downlink shared data channel control information received as input from the downlink shared data channel control information demodulating section 405c. The higher control information is output to the channel estimating section 407. The downlink shared channel data demodulating section 406b demodulates downlink shared channel data based on the uplink shared data channel control information that is input from the uplink shared data channel control information demodulating section 405b.

The channel estimating section 407 performs channel estimation using common reference signals. The estimated channel variance is output to the shared control channel control information demodulating section 405a, the uplink shared data channel control information demodulating section 405b, the downlink shared data channel control information demodulating section 405c and the downlink shared data demodulating section 406a. These demodulating sections demodulate downlink signals using the estimated channel variance and demodulation reference signals.

The baseband signal processing section 104 has a data generating section 411, a channel coding section 412, a modulating section 413, a DFT section 414, a mapping section 415, an IFFT section 416, and a CP inserting section 417, which are provided as functional blocks of transmission processing sequence. The data generating section 411 generates transmission data from bit data that is received as input from the application section 105. The channel coding section 412 applies channel coding processing such as error correction and so on to the transmission data, and the modulating section 413 modulates the transmission data having been subjected to channel coding by QPSK and so on.

The DFT section 414 performs discrete Fourier transform on the modulated transmission data. The mapping section 415 maps frequency components of data symbols having been subjected to DFT, to subcarrier positions indicated by the base station apparatus 20. The mapping section 415 is notified of the resource allocation information of each demodulated cluster by the uplink shared data channel control information demodulating section 405b. When the clustered DFT-Spread OFDM is applied to the uplink, the mapping section 415 maps the frequency components of the data symbols to discontiguous allocation positions (subcarrier positions) indicated by the RBG numbers of the resource allocation information. When SC-FDMA is applied to the uplink, the mapping section 415 maps the frequency components of the data symbols to contiguous allocation positions (subcarrier positions) indicated by the resource allocation position.

The IFFT section 416 performs inverse fast Fourier transform on input data corresponding to the system band and converts it to time sequence data and the CP inserting section 417 insert cyclic prefixes to the time sequence data at intervals between data pieces.

As described above, according to the base station apparatus 20 of the present embodiment, the allocation position of a cluster allocated per RBG of a relatively small size can be indicated to the mobile terminal apparatus 10 by an RBG number of a relatively large RBG size. Accordingly, it becomes possible to prevent the increase in amount of signaling for uplink resource allocation which is caused by subdividing the allocation size of each cluster in the frequency band. Hence, it is possible to perform detailed allocation of a plurality of clusters to the frequency band while preventing the increase in signaling amount, thereby increasing the frequency scheduling effect.

Note that in the above-described embodiment, the number of clusters is 2. However, this is by no means limiting. The number of clusters may be 3 or more. If the number of clusters is 3 or more, it is possible to indicate each cluster allocated in a relatively small RBG size with use of an RBG number of a relatively large RBG size, like in the case where the number of clusters is 2.

Besides, in the above-described embodiment, single allocation of the first cluster and the second cluster to half RBs of one RBG is allowed. However, this is by no means limiting. Single allocation to half RBs of one RBG may be allowed only to any of the plural clusters. For example, when only the first cluster is allowed to be allocated singly to half RBs of one RBG, it is possible to reduce the total number of RBG numbers and further reduce the number of signaling bits for uplink resource allocation.

The present invention is not limited to the above-mentioned embodiments and may be embodied in various modified formed. For example, the allocation of clusters, the number of processing sections, the processing procedures, the number of clusters and RBG size may be modified as appropriate without departing from the scope of the present invention. Any other modifications may be also made to the present invention without departing from the scope of the present invention.

The disclosure of Japanese Patent Application No. 2010-181907, filed on August 16, 2010, including the specification, drawings, and abstract, is incorporated herein by reference in its entirety.

**Claims**

1. A base station apparatus comprising:

   a scheduling section configured to determine discontiguous allocation positions of a plurality of clusters to a frequency band, the frequency band being divided per resource block group of a relatively small size or per resource block, and the resource block group being made of contiguous resource blocks;
   an uplink control information generating section configured to generate uplink allocation information to indicate each of the allocation positions of the clusters to a mobile terminal apparatus with use of a group number of resource block group of a relatively large size; and
   a transmitting section configured to transmit the uplink allocation information to the mobile terminal apparatus.

2. The base station apparatus of claim 1, wherein the scheduling section determines the allocation positions of a first cluster and a second cluster as the plurality of clusters,
   the uplink control information generating section generates the uplink allocation information to indicates the allocation positions of the first cluster and the second cluster,

an allocation position of the first cluster corresponding to an n-th resource block group of the relatively large size is defined by a group number n and a group number n+1,

an allocation position of the first cluster corresponding to a first-half resource block of the n-th resource block group of the relatively large size is defined by the group number n and a group number n+2,

an allocation position of the first cluster corresponding to a latter-half resource block of the n-th resource block group of the relatively large size is defined by the group number n and a group number n+3, and

an allocation position of the first cluster corresponding to n-th to m-th (m>n) resource block groups of the relatively large size is defined by the group number n and a group number m+3.

3. The base station apparatus of claim 2, wherein the uplink control information generating section defines:

an allocation position of the second cluster corresponding to an i-th (i>m+1) resource block group of the relatively large size by a group number i+2 and a group number i+3,

an allocation position of the second cluster corresponding to a first-half resource block of the i-th resource block group of the relatively large size by the group number i+2 and a group number i+4,

an allocation position of the second cluster corresponding to a latter-half resource block of the i-th resource block group of the relatively large size by the group number i+2 and a group number i+5, and

an allocation position of the second cluster corresponding to i-th to j-th (j>i) resource block groups of the relatively large size by the group number i+2 and a group number j+5.

4. The base station apparatus of any one of claims 1 to 3, wherein the resource block group of the relatively large size is twice as large as the resource block group of the relatively small size.

5. A mobile terminal apparatus comprising:

a receiving section configured to receive uplink allocation information to indicate each of discontiguous allocation positions of a plurality of clusters to a frequency band by a group number of resource block group of a relative large size, the frequency band being divided per resource block group of a relatively small size or per resource block, and the resource block group being made of contiguous resource blocks; and

a transmitting section configured to transmit uplink data to a base station apparatus, using the clusters, based on the uplink allocation information.

6. The mobile terminal apparatus of claim 5, wherein the receiving section receives the uplink allocation information to indicate the allocation positions of a first cluster and a second cluster as the plurality of clusters,

in the uplink allocation information,

an allocation position of the first cluster corresponding to an n-th resource block group of the relatively large size is defined by a group number n and a group number n+1,

an allocation position of the first cluster corresponding to a first-half resource block of the n-th resource block group of the relatively large size is defined by the group number n and a group number n+2,

an allocation position of the first cluster corresponding to a latter-half resource block of the n-th resource block group of the relatively large size is defined by the group number n and a group number n+3, and

an allocation position of the first cluster corresponding to n-th to m-th (m>n) resource block groups of the relatively large size is defined by the group number n and a group number m+3.

7. The mobile terminal apparatus of claim 6, wherein in the uplink allocation information received by the receiving section,

an allocation position of the second cluster corresponding to an i-th (i>m+1) resource block group of the relatively large size is defined by a group number i+2 and a group number i+3,

an allocation position of the second cluster corresponding to a first-half resource block of the i-th resource block group of the relatively large size is defined by the group number i+2 and a group number i+4,

an allocation position of the second cluster corresponding to a latter-half resource block group of the i-th resource block group of the relatively large size is defined by the group number i+2 and a group number i+5, and

an allocation position of the second cluster corresponding to i-th to j-th (j>i) resource block groups of the relatively large size is defined by the group number i+2 and a group number j+5.

8. The mobile terminal apparatus of any one of claims 5 to 7, wherein the resource block group of the relatively large size is twice as large as the resource block group of the relatively small size.

9. A communication control method of a base station apparatus, comprising the steps of:

determining discontiguous allocation positions of a plurality of clusters to a frequency band, the frequency band being divided per resource block group of a relatively small size or per resource block, and the resource block group being made of contiguous resource blocks;

generating uplink allocation information to indicate each of the allocation positions of the clusters to a mobile terminal apparatus with use of a group number of resource block group of a relative large size; and

transmitting the uplink allocation information to the mobile terminal apparatus.

BASE BAND(ex.20MHz):COMPONENT CARRIER(CC)

SYSTEM BAND(ex.100MHz)

UE#1(LTE-A)

UE#2(LTE-A)

UE#2(LTE-A)

UE#3(LTE)　　UE#3(LTE)　　UE#3(LTE)　　UE#3(LTE)　　UE#3(LTE)

FIG.1

EP 2 608 597 A1

FIG.2B

FIG.2A

50 RBS

#0 #1 #2 #3 #4 #5 #6 #7 #8 #9 #10 #11 #12 #13 #14 #15 #16 #17 #18 #19 #20 #21 #22 #23 #24 #25 #26 #27 #28 #29 #30 #31 #32 #33 #34 #35 #36 #37 #38 #39 #40 #41 #42 #43 #44 #45 #46 #47 #48 #49

FREQUENCY

13 RBGS

| #0 | #1 | #2(#n) | #3 | #4 | #5(#m) | #6 | #7 | #8 | #9(#i) | #10(#m) | #11 | #12 |

FREQUENCY

1ST CLUSTER      2ND CLUSTER

13 RBG NUMBERS

| 0 | 1 | 2 | 3 | 4 | 5 | 6 | 7 | 8 | 9 | 10 | 11 | 12 |

n      m      i    j

RGB INDEX

1ST CLUSTER RBG    RBG NUMBER      2ND CLUSTER RBG    RBG NUMBER

#n ~ #m     n, m        #i ~ #j     i, j

FIG.3

EP 2 608 597 A1

EP 2 608 597 A1

13 RBGS

| #0 | #1 | #2 | #3 | #4 | #5 | #6 | #7 | #8 | #9 | #10 | #11 | #12 |

1ST CLUSTER  2ND CLUSTER  FREQUENCY

FIG.4A

13 RBGS

| #0 | #1 | #2(#n) | #3 | #4 | #5 | #6 | #7 | #8 | #9(#i) | #10(#j) | #11 | #12 |

1ST CLUSTER  2ND CLUSTER  FREQUENCY

15 RBG NUMBERS

| 0 | 1 | (2) | (3) | 4 | 5 | 6 | 7 | 8 | 9 | (10) | 11 | (12) | 13 | 14 |

n  n+1                                        i+1        j+2

RGB INDEX

1ST CLUSTER RBG      RBG NUMBER                 2ND CLUSTER RBG    RBG NUMBER
#n                   n, n + 1                   #i                 i + 1, i + 2
#n − #m              n, m + 1                    #i − #j            i + 1, j + 2

FIG.4B

13 RBGS

| #0 | #1 | #2 | #3 | #4 | #5 | #6 | #7 | #8 | #9 | #10 | #11 | #12 |

1ST CLUSTER   2ND CLUSTER  FREQUENCY

FIG.4C

13 RBGS

| #0 | #1 | #2(#n) | #3 | #4(#i) | #5(#j) | #6 | #7 | #8 | #9 | #10 | #11 | #12 |

1ST CLUSTER  2ND CLUSTER  FREQUENCY

14 RBG NUMBERS

| 0 | 1 | (2) | (3) | (4) | 5 | (6) | 7 | 8 | 9 | 10 | 11 | 12 | 13 |

n  n+1  i    j+1

RGB INDEX

1ST CLUSTER RBG      RBG NUMBER                 2ND CLUSTER RBG    RBG NUMBER
#n                   n, n + 1                   #i                 i , i + 1
#n − #m              n, m + 1                    #i − #j            i , j + 1

FIG.4D

13 RBGS

#0 | #1 | #2(#n) | #3 | #4 | #5 | #6 | #7 | #8 | #9(#i) | #10(#j) | #11 | #12

FREQUENCY

2RB

4RB

1ST CLUSTER

2ND CLUSTER

18 RBG NUMBERS

0 | 1 | 2 | 3 | 4 | 5 | 6 | 7 | 8 | 9 | 10 | 11 | 12 | 13 | 14 | 15 | 16 | 17

n | n+1 | i+2 | j+5

RGB INDEX

1ST CLUSTER RBG | RBG NUMBER
#n | n, n + 1
#n FIRST-HALF | n, n + 2
#n LATTER-HALF | n, n + 3
#n – #m | n, m + 3

2ND CLUSTER RBG | RBG NUMBER
#i | i +2, i + 3
#i FIRST-HALF | i +2, i + 4
#i LATTER-HALF | i +2, i + 5
#i – #j | i +2, j + 5

FIG.5A

13 RBGS

#0 | #1 | #2(#n) | #3 | #4 | #5 | #6 | #7 | #8 | #9(#i) | #10(#j) | #11 | #12

FREQUENCY

1ST CLUSTER

2ND CLUSTER

18 RBG NUMBERS

0 | 1 | 2 | 3 | 4 | 5 | 6 | 7 | 8 | 9 | 10 | 11 | 12 | 13 | 14 | 15 | 16 | 17

n | n+2 | i+2 | j+5

RGB INDEX

FIG.5B

13 RBGS

#0 | #1 | #2(#n) | #3 | #4 | #5 | #6 | #7 | #8 | #9(#i) | #10(#j) | #11 | #12

FREQUENCY

1ST CLUSTER

2ND CLUSTER

18 RBG NUMBERS

0 | 1 | 2 | 3 | 4 | 5 | 6 | 7 | 8 | 9 | 10 | 11 | 12 | 13 | 14 | 15 | 16 | 17

n | n+3 | i+2 | j+5

RGB INDEX

FIG.5C

17

FIG.6

EP 2 608 597 A1

201

20

TO HIGHER STATION APPARATUS 30

206
TRANSMISSION PATH INTERFACE

204
BASEBAND SIGNAL PROCESSING SECTION

203
TRANSMITTING/ RECEIVING SECTION

202
AMPLIFYING SECTION

205
CALL PROCESSING SECTION

FIG.7

FIG.8

EP 2 608 597 A1

FIG.9

FIG.10

## INTERNATIONAL SEARCH REPORT

| | International application No. |
|---|---|
| | PCT/JP2011/067886 |

**A. CLASSIFICATION OF SUBJECT MATTER**
*H04W28/06(2009.01)i, H04W72/04(2009.01)i*

According to International Patent Classification (IPC) or to both national classification and IPC

**B. FIELDS SEARCHED**

Minimum documentation searched (classification system followed by classification symbols)
H04B7/24-7/26, H04W4/00-99/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | LG Electronics, Non-Contiguous PUSCH Resource Allocation Scheme on LTE-A, 3GPP TSG RAN WG1 Meeting #61bis, R1-103964, 2010.07.02, all pages | 1-9 |
| A | ZTE, Uplink Non-contiguous Resource Allocation for LTE-Advanced, 3GPP TSG RAN WG1 Meeting #60, R1-100965, 2010.02.26, all pages | 1-9 |
| A | Mitsubishi Electric, Details on multi-cluster PUSCH resource allocation, 3GPP TSG RAN WG1 #61 meeting, R1-103239, 2010.05.14, all pages | 1-9 |
| A | Panasonic, Signaling for UL non-contiguous resource allocation, 3GPP TSG-RAN WG1 Meeting #59bis, R1-100370, 2010.01.22, all pages | 1-9 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 October, 2011 (14.10.11) | 25 October, 2011 (25.10.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010181907 A

**Non-patent literature cited in the description**

- Feasibility study for Evolved UTRA and UTRAN. *3GPP, TR25.912 (V7.1.0,* September 2006